# EUROPEAN PATENT APPLICATION

(11) **EP 4 822 862 A1**
(43) Date of publication of application: **14.10.2026**
(21) Application number: 26166091.4
(22) Date of filing: 19.03.2026
(51) Int. Cl.: H01M 50/358, H01M 10/613, H01M 10/6562, H01M 10/6567, H01M 50/242, H01M 50/262, H01M 50/30

(54) **ELECTRICAL ENERGY STORAGE PACK**

(30) Priority: 07.04.2025 JP 2025063193
(71) Applicant: Prime Planet Energy & Solutions, Inc., Chuo-ku, Tokyo 103-0022 (JP)
(72) Inventor: UEMURA, Yasuaki, Tokyo 103-0022 (JP)
(74) Representative: Kuhnen & Wacker Patent- und Rechtsanwaltsbüro PartG mbB

(57) **Abstract**

An electrical energy storage pack (800) disclosed herein includes a plurality of electrical energy storage devices (100) and a case (600). The case (600) includes a main body part (610), a bottom surface cover (640), and an air flow path (EP) and a refrigerant flow path (FP) that are provided between a bottom surface (610a) of the main body part (610) and the bottom surface cover (640). The bottom surface (610a) includes an air flow concave part (611), a refrigerant concave part (613), and a boss part (619) that projects toward the bottom surface cover (640) on a side of the air flow concave part (611) relative to a seal material (660) at a border part (BP) between the air flow concave part (611) and the refrigerant concave part (613). The bottom surface cover (640) is screwed to the boss part (619).

## Description

### BACKGROUND OF THE DISCLOSURE

### 1. Field

The present disclosure relates to an electrical energy storage pack.

### 2. Background

Conventionally, an electrical energy storage pack including a plurality of electrical energy storage devices and a case that accommodates the electrical energy storage devices has been used as a power source for driving a vehicle, or the like. In relation to this, for example, Japanese Patent Application Publication No. 2020-61291 (Patent Literature 1) discloses an electrical energy storage pack in which the case includes a main body part having a bottom surface, and a bottom surface cover in a plate-like shape that covers the bottom surface from an outer surface side, and a flow path for a refrigerant (refrigerant flow path) is provided between the bottom surface and the bottom surface cover by screwing the bottom surface cover to a fixing part provided at the bottom surface.

### SUMMARY

In the case, a flow path for air (air flow path) may be provided between the bottom surface of the main body part and the bottom surface cover in addition to the refrigerant flow path described above for the purpose of exhausting gas discharged from the electrical energy storage device, for example. However, a border part between the air flow path and the refrigerant flow path is thin in wall thickness, so that it is difficult to provide the fixing part. For this reason, the bottom surface cover tends to expand largely due to an influence from the pressure of the refrigerant. Furthermore, it is difficult to keep the sealability of the refrigerant flow path.

The present disclosure has been made in view of the above circumstances, and a main object thereof is to provide an electrical energy storage pack in which a bottom surface cover will not easily expand at a border part between an air flow path and a refrigerant flow path.

An electrical energy storage pack according to the present disclosure includes a plurality of electrical energy storage devices, and a case that accommodates the plurality of electrical energy storage devices. The case includes a main body part that includes a bottom surface, a bottom surface cover that covers the bottom surface from an outer surface side, an air flow path that is provided between the bottom surface and the bottom surface cover and communicates with an outside of the case, a refrigerant flow path that is provided between the main body part and the bottom surface cover and lets a refrigerant flow therein, and a seal material that is disposed so as to surround an outer edge of the refrigerant flow path and adheres to the bottom surface and the bottom surface cover, thereby sealing the refrigerant flow path. The bottom surface of the main body part includes, on a surface on a side facing the bottom surface cover, an air flow concave part that is recessed to a side of separating from the bottom surface cover and sections the air flow path, a refrigerant concave part that is at least partially adjacent to the air flow concave part through the seal material, is recessed to the side of separating from the bottom surface cover, and sections the refrigerant flow path, and a boss part that projects toward the bottom surface cover on a side of the air flow concave part relative to the seal material at a border part between the air flow concave part and the refrigerant concave part, and the bottom surface cover is screwed to the boss part.

According to the present disclosure, the provision of the boss part at the border part makes it possible to secure the overlap allowance for a screw. Thus, a fixing part can be provided on the bottom surface cover at the border part and the integrity between the main body part and the bottom surface cover can be increased. Therefore, the expansion of the bottom surface cover due to the pressure of the refrigerant can be suppressed. As a result, the sealability of the refrigerant flow path can be increased.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrical energy storage pack according to one embodiment;
FIG. 2 is a perspective view schematically illustrating an electrical energy storage module in FIG. 1;
FIG. 3 is a perspective view schematically illustrating one electrical energy storage device;
FIG. 4 is a plan view schematically illustrating a bottom surface of a case in FIG. 1; and
FIG. 5 is a cross-sectional view taken along line V-V in FIG. 4.

### DETAILED DESCRIPTION OF THE EMBODIMENTS

Hereinafter, preferred embodiments of the art disclosed herein will be described with reference to the drawings as appropriate. Matters that are other than matters particularly mentioned in the present specification and that are necessary for the implementation of the art disclosed herein (for example, the general configuration and manufacturing process of an electrical energy storage pack that do not characterize the art disclosed herein) can be grasped as design matters of those skilled in the art based on the prior art in the relevant field. The art disclosed herein can be implemented on the basis of the disclosure of the present specification and common technical knowledge in the relevant field.

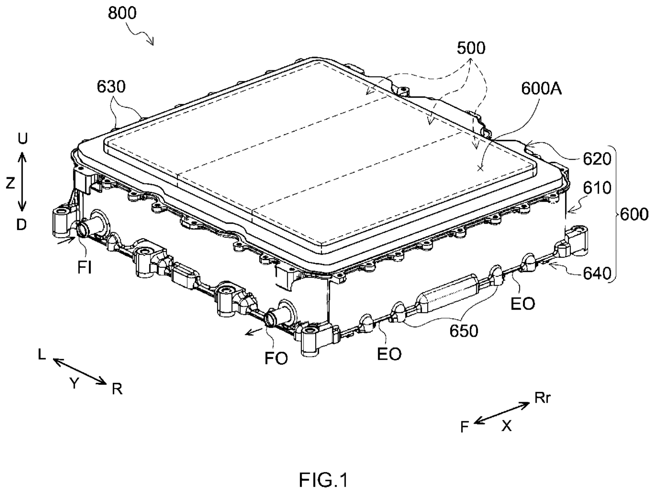

FIG. 1 is a perspective view schematically illustrating an electrical energy storage pack 800 according to one embodiment. In the following drawings, reference signs F, Rr, L, R, U, and D in the drawings respectively denote front, rear, left, right, up, and down, and reference signs X, Y, and Z in the drawings respectively denote a first direction, a second direction that is orthogonal to the first direction, and a third direction that is orthogonal to the first direction and the second direction. The first direction X corresponds to an arrangement direction of an electrical energy storage device to be described below. The third direction Z corresponds to an up-down direction here. These directions are defined however for convenience of explanation, and do not limit the manner in which an electrical energy storage module or the electrical energy storage pack is disposed. Note that in the drawings below, the members and parts with the same operation are denoted by the same reference signs and the overlapping description may be omitted or simplified.

As illustrated in FIG. 1, the electrical energy storage pack 800 according to this embodiment includes a plurality of electrical energy storage modules 500 and a case 600. The case 600 is a housing that accommodates the plurality of electrical energy storage modules 500. The case 600 may be formed of the same material as the conventionally used material without particular limitations. The case 600 is preferably made of metal, and more preferably made of aluminum, an aluminum alloy, iron, an iron alloy, stainless steel, or the like, for example. The case 600 according to this embodiment includes a main body part 610, an upper surface cover 620, and a bottom surface cover 640.

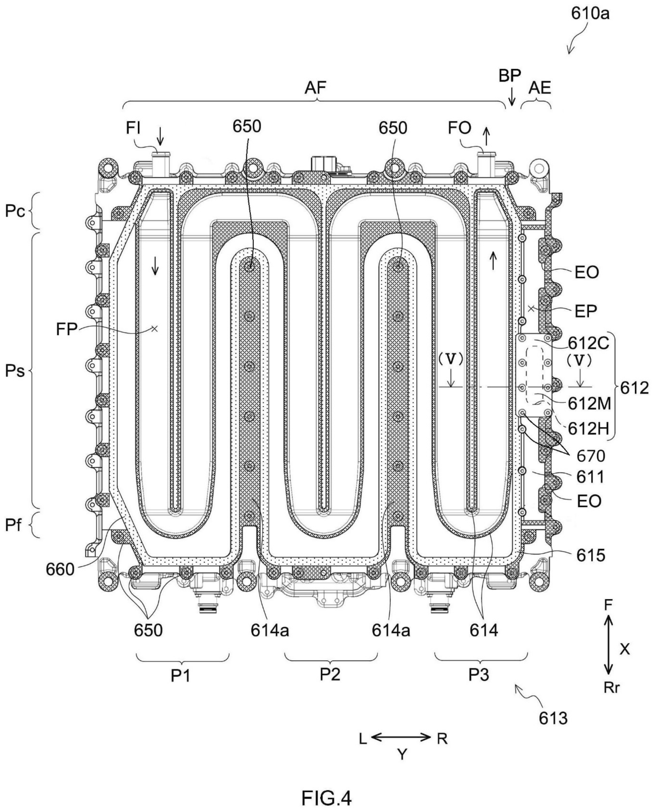

The main body part 610 has a bottomed square tubular shape (box-like shape) including a bottom surface 610a (see FIG. 4), and an opening facing the bottom surface 610a here. The main body part 610 is a casting product molded by casting here. The upper surface cover 620 is a member that seals the opening of the main body part 610. The upper surface cover 620 forms a first surface (an upper surface in FIG. 1) of the case 600 in the third direction Z. The main body part 610 and the upper surface cover 620 are fastened to each other at a plurality of fastening parts 630 provided at an outer edge of the case 600, and are integrated. The main body part 610 and the upper surface cover 620 section an accommodation space 600A (a first space) of the case 600. The accommodation space 600A accommodates the plurality of electrical energy storage modules 500.

The bottom surface cover 640 is a member that covers the bottom surface 610a (see FIG. 4) of the main body part 610 from an outer surface side. The bottom surface cover 640 is disposed facing the bottom surface 610a. The bottom surface cover 640 is a plate-shaped member here. The bottom surface cover 640 forms a second surface (a lower surface in FIG. 1) of the case 600 in the third direction Z. The main body part 610 and the bottom surface cover 640 are fastened to each other at a plurality of fastening parts 650 provided at the outer edge of the case 600 or the like, and are integrated. Between the bottom surface 610a of the main body part 610 and the bottom surface cover 640, an exhaust flow path EP (a second space, see FIG. 4) that communicates with the outside of the case 600 and a refrigerant flow path FP (a third space, see FIG. 4) in which a refrigerant flows are provided, which will be described in detail below.

As illustrated in FIG. 1, the case 600 includes an opening part EO, an inflow part FI, and an outflow part FO. The opening part EO is a part that makes the exhaust flow path EP (see FIG. 4) communicate with the outside (external air) of the case 600. Here, the number of opening parts EO is plural (specifically, two). The plurality of opening parts EO are provided with a space therebetween in the first direction X (on a front side and a rear side in FIG. 1) here.

The inflow part FI is a part that communicates with the refrigerant flow path FP (see FIG. 4) and makes the refrigerant flow from the outside of the case 600 into the refrigerant flow path FP. The inflow part FI is provided at a side surface (a YZ surface in FIG. 1) of the case 600 (specifically, the main body part 610) here. The inflow part FI is provided at a surface that intersects with the upper surface cover 620 and/or the bottom surface cover 640. Note that the refrigerant can be any refrigerant that has been known as being usable in this kind of application conventionally, without particular limitations. One example is a liquid such as cooling water.

The outflow part FO is a part that communicates with the refrigerant flow path FP (see FIG. 4) and makes the refrigerant flowing in the refrigerant flow path FP go out of the case 600. The outflow part FO is provided at the side surface (the YZ surface in FIG. 1) of the case 600 (specifically, the main body part 610) here. The outflow part FO is provided at the same surface as the inflow part FI of the case 600 here. The outflow part FO is provided at the surface that intersects with the upper surface cover 620 and/or the bottom surface cover 640.

As illustrated in FIG. 1, the electrical energy storage modules 500, which are plural (specifically, three) here, are arranged in the second direction Y in the accommodation space 600A of the case 600. Note that the number and the arrangement of the electrical energy storage modules 500 are not limited in particular. The number of electrical energy storage modules 500 may be three or less or may be one, for example. In addition, the electrical energy storage modules 500 may be arranged in the first direction X, for example. Furthermore, the structure of the electrical energy storage module 500 is not limited in particular and may be similar to the conventional one.

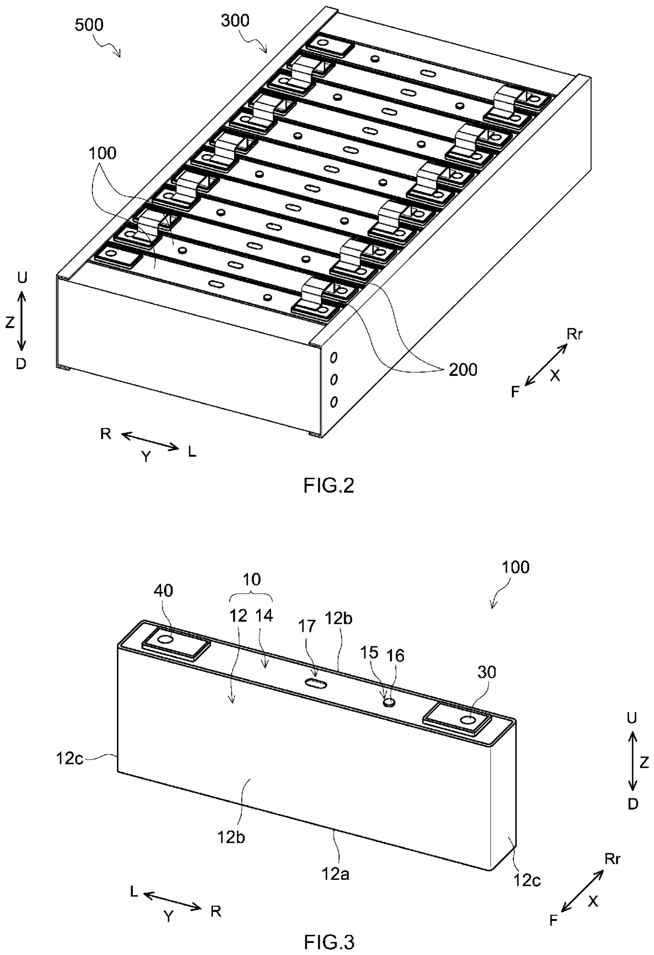

FIG. 2 is a perspective view schematically illustrating the electrical energy storage module 500. The electrical energy storage module 500 according to this embodiment includes a plurality of electrical energy storage devices 100 that are disposed along the arrangement direction X, and spacers 200 each disposed between the electrical energy storage devices 100 adjacent to each other in the arrangement direction X. The electrical energy storage module 500 additionally includes a restriction mechanism 300 configured to apply a predetermined restriction load on the plurality of electrical energy storage devices 100 from the arrangement direction X here. Thus, the plurality of electrical energy storage devices 100 are held integrally.

In this embodiment, the plurality of electrical energy storage devices 100 are disposed in the case 600 with a so-called cell-module-pack structure, in which the plurality of electrical energy storage devices 100 are accommodated in the restriction mechanism 300. In another embodiment, however, the plurality of electrical energy storage devices 100 may be disposed in the case 600 with a so-called cell-to-pack structure, in which the plurality of electrical energy storage devices 100 are directly supported on a wall surface of the case 600.

The spacer 200 is a member to separate the plurality of electrical energy storage devices 100 from each other. The spacer 200 is preferably an insulating member. Each spacer 200 is disposed between the plurality of electrical energy storage devices 100 in the arrangement direction X here. That is to say, in the arrangement direction X, the electrical energy storage devices 100 and the spacers 200 are arranged alternately in the electrical energy storage module 500. However, the spacers 200 are not essential and can be omitted in another embodiment.

The electrical energy storage device 100 is a device capable of being repeatedly charged and discharged. Note that in the present specification, the term "electrical energy storage device" refers to a concept encompassing secondary batteries such as lithium ion secondary batteries and nickel-hydrogen batteries and capacitors such as lithium ion capacitors, pseudo-capacitors, and electrical double-layer capacitors.

The plurality of electrical energy storage devices 100 are arranged along the arrangement direction X (a thickness direction of the electrical energy storage device 100). In this embodiment, the even-numbered electrical energy storage devices 100 in the arrangement direction X are disposed by being rotated by 180° (inverted state) with respect to the odd-numbered electrical energy storage devices 100 in the arrangement direction X. The plurality of electrical energy storage devices 100 have the same shape and size here. However, the shape, the size, the number, and the like of the plurality of electrical energy storage devices 100 included in the electrical energy storage module 500 are not limited to the aspect illustrated in FIG. 2, and can be changed as appropriate.

FIG. 3 is a perspective view of the electrical energy storage device 100. As illustrated in FIG. 3, the electrical energy storage device 100 has a flat and square shape. The electrical energy storage device 100 is a square secondary battery. The electrical energy storage device 100 according to this embodiment includes a battery case 10, and an electrode body and an electrolyte solution that are not illustrated. The electrical energy storage device 100 is a nonaqueous electrolyte solution secondary battery here, and specifically a lithium ion secondary battery.

The battery case 10 is a container that accommodates the electrode body and the electrolyte solution. As illustrated in FIG. 3, the external shape of the battery case 10 is a flat and cuboid shape (square shape). A conventionally used material can be used for the battery case 10, without particular limitations. The battery case 10 is preferably made of metal, and for example, more preferably made of aluminum, an aluminum alloy, iron, an iron alloy, stainless steel, or the like. The battery case 10 here includes a case main body 12 including an opening and a sealing plate 14 (lid body) that seals the opening.

The case main body 12 has a bottomed square tubular shape here. The case main body 12 includes a lower surface 12a with a substantially rectangular shape including long sides and short sides, a pair of long side surfaces 12b extending from the pair of long sides of the lower surface 12a and facing each other, and a pair of short side surfaces 12c extending from the pair of short sides of the lower surface 12a and facing each other. The lower surface 12a is a surface facing the bottom surface 610a of the case 600. The long side surface 12b is a surface that is orthogonal to the arrangement direction X. The long side surface 12b is a surface facing (specifically, in contact with) the spacer 200 here. Note that in the present specification, the term "substantially rectangular shape" encompasses, in addition to a perfect rectangular shape (rectangle), for example, a shape whose corner part connecting a long side and a short side of the rectangular shape is rounded (rounded corner), a shape whose corner part includes a notch, and the like.

The case main body 12 internally accommodates the electrode body and the electrolyte solution. The electrode body includes a positive electrode and a negative electrode. The electrolyte solution is typically a nonaqueous electrolyte solution containing a nonaqueous solvent and a supporting salt (electrolyte salt). Since the electrode body and the electrolyte solution may be similar to the conventional ones, the detailed explanation is omitted here.

As illustrated in FIG. 3, the sealing plate 14 has a substantially rectangular shape in the plan view. The sealing plate 14 is a plate-shaped member that extends along an XY plane. The sealing plate 14 is attached to the opening of the case main body 12. The sealing plate 14 is a surface facing the upper surface cover 620 of the case 600. The battery case 10 is integrated in such a way that the sealing plate 14 is joined (preferably, joined by welding) to a peripheral edge of the opening of the case main body 12. The battery case 10 is hermetically sealed (closed).

A liquid injection hole 15, a gas discharge valve 17, and a positive electrode terminal 30 and a negative electrode terminal 40 are provided in the sealing plate 14. The liquid injection hole 15 is provided for the purpose of injecting the electrolyte solution into the battery case 10 after the sealing plate 14 is assembled to the case main body 12. The liquid injection hole 15 is sealed by a sealing member 16 after the electrolyte solution is injected. The gas discharge valve 17 is configured to break when gas is generated in the battery case 10 and the internal pressure of the battery case 10 becomes more than or equal to a predetermined value due to the generated gas. Thus, the gas generated in the battery case 10 is discharged to the outside of the battery case 10 through the gas discharge valve 17, specifically to the accommodation space 600A of the case 600.

The positive electrode terminal 30 is disposed on one end part of the sealing plate 14 in the second direction Y and the negative electrode terminal 40 is disposed on the other end part thereof. The positive electrode terminal 30 is electrically connected to the positive electrode of the electrode body inside the case main body 12. The negative electrode terminal 40 is electrically connected to the negative electrode of the electrode body inside the case main body 12.

A bus bar for electrically connecting the plurality of electrical energy storage devices 100 to each other is attached to the positive electrode terminal 30 and the negative electrode terminal 40. In this embodiment, in the two electrical energy storage devices 100 that are adjacent to each other in the arrangement direction X, the positive electrode terminal 30 of one electrical energy storage device 100 and the negative electrode terminal 40 of the other electrical energy storage device 100 are electrically connected to each other by the bus bar. Thus, the plurality of electrical energy storage devices 100 are electrically connected to each other in series. However, the connection method between the plurality of electrical energy storage devices 100 is not limited to the series connection and may be, for example, parallel connection, multiple series-multiple parallel connection, or the like.

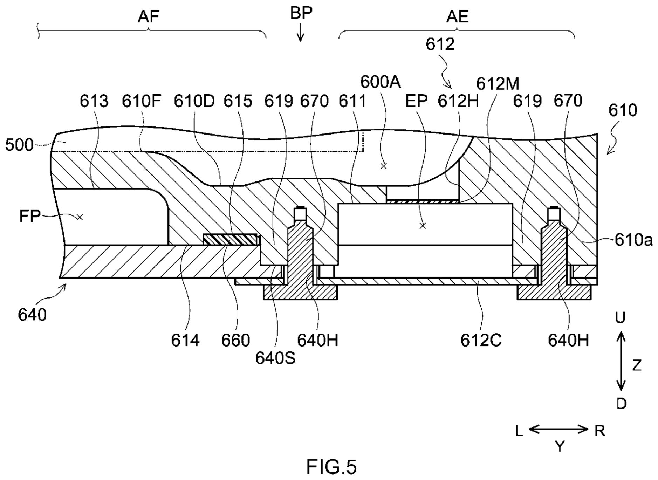

FIG. 4 is a plan view schematically illustrating the bottom surface 610a of the main body part 610 of the case 600. FIG. 5 is a cross-sectional view taken along line V-V in FIG. 4. Note that FIG. 4 illustrates a surface on the outer surface side (side opposite to the accommodation space 600A) of the bottom surface 610a, that is, a surface on a side facing the bottom surface cover 640. Since the case 600 is turned over, the front-back direction in FIG. 4 is opposite to that in FIG. 1. Moreover, FIG. 5 illustrates the bottom surface cover 640 additionally.

As illustrated in FIG. 4, the bottom surface 610a of the main body part 610 is sectioned into an exhaust region AE existing on one side (right side in FIG. 4) in the second direction Y and a refrigerant region AF existing on the other side (left side in FIG. 4) in the second direction Y in the plan view. The exhaust region AE and the refrigerant region AF are provided adjacent to each other in the second direction Y here. In the second direction Y, the exhaust region AE and the refrigerant region AF are sectioned along a border part BP.

In the exhaust region AE existing on one side (right side) in the second direction Y, the exhaust flow path EP is provided between the bottom surface 610a of the main body part 610 of the case 600 and the bottom surface cover 640 as illustrated in FIG. 4 and FIG. 5. As illustrated in FIG. 4, the exhaust flow path EP communicates with the outside of the case 600 through the plurality of opening parts EO. In addition, the exhaust flow path EP communicates with the accommodation space 600A (the first space) of the case 600 through an air communication part 612. The exhaust flow path EP is a hollow part, and forms a flow path of the exhaust gas from the air communication part 612 to the opening part EO. The exhaust flow path EP is one example of "air flow path" disclosed herein.

In the exhaust region AE, the bottom surface 610a of the main body part 610 includes an exhaust concave part 611 and the air communication part 612 on the surface on the side facing the bottom surface cover 640. As illustrated in FIG. 4, the exhaust concave part 611 extends in a straight line shape along the first direction X here. The exhaust concave part 611 is recessed to a side of separating from the bottom surface cover 640 (toward the accommodation space 600A of the case 600) as illustrated in FIG. 5. The exhaust concave part 611 is one example of "air flow concave part" disclosed herein. The exhaust concave part 611 has a substantially U-like shape in a cross-sectional view here. The exhaust concave part 611 sections the exhaust flow path EP together with the bottom surface cover 640. The exhaust concave part 611 (or the exhaust flow path EP) is provided preferably with at least a part thereof existing at a position overlapping with the plurality of electrical energy storage devices 100 in a top view. This arrangement can save the space for the electrical energy storage pack 800. As a result, the energy density of the electrical energy storage pack 800 can be improved.

The air communication part 612 is configured to keep a predetermined pressure (typically, atmospheric pressure state) in the accommodation space 600A (the first space) of the case 600. The air communication part 612 includes a communication hole 612H, a film-shaped body 612M (air permeable film) that closes the communication hole 612H, and a protection cover 612C that protects the film-shaped body 612M as illustrated in FIG. 4 and FIG. 5. The communication hole 612H is provided so as to make the accommodation space 600A of the case 600 and the exhaust flow path EP communicate with each other by penetrating the bottom surface 610a of the case 600 in the third direction Z as illustrated in FIG. 5. Accordingly, in this embodiment, the exhaust flow path EP to exhaust the gas generated from the plurality of electrical energy storage devices 100 forms the air flow path.

The film-shaped body 612M is a film-shaped member with air permeability. The film-shaped body 612M is typically a porous film with microscopic holes. The film-shaped body 612M is preferably a film made of resin, and examples thereof include films made of fluorine resin such as polytetrafluoroethylene, polyolefin resin such as polyethylene or polypropylene, polyester resin, and the like. More specifically, a porous film made of the resin described above, polyester nonwoven fabric, or the like can be used. The film-shaped body 612M is configured to allow the passage of gas such as air but block the passage of liquid such as moisture here. Thus, the entry of moisture into the accommodation space 600A of the case 600 is suppressed.

Here, the film-shaped body 612M is configured to break when the gas discharge valve 17 of the electrical energy storage device 100 is broken, the gas is discharged to the accommodation space 600A, and the discharged gas causes the internal pressure of the accommodation space 600A to become more than or equal to a predetermined value. When the film-shaped body 612M is broken and the communication hole 612H is opened, the gas discharged from the electrical energy storage device 100 flows into the exhaust flow path EP through the communication hole 612H. The gas flowing into the exhaust flow path EP is discharged to the outside of the case 600 through the opening part EO. In this manner, the gas is discharged from the accommodation space 600A of the case 600 to the outside of the electrical energy storage pack 800.

The protection cover 612C is a plate-shaped member made of metal, for example, and is attached to a peripheral edge part of the communication hole 612H so as to cover the film-shaped body 612M from the outer surface side. The protection cover 612C is screwed to a boss part 619, which will be described below, together with the bottom surface cover 640 here.

On the other hand, in the refrigerant region AF existing on the other side (left side) in the second direction Y, the refrigerant flow path FP in which the refrigerant flows and a seal material 660 that adheres to the bottom surface 610a of the main body part 610 and the bottom surface cover 640 to seal the refrigerant flow path FP are provided between the bottom surface 610a of the main body part 610 of the case 600 and the bottom surface cover 640 as illustrated in FIG. 4 and FIG. 5. The refrigerant flow path FP is a hollow part and forms the flow path for the refrigerant from the inflow part FI to the outflow part FO as illustrated in FIG. 4. The refrigerant flow path FP is at least partially adjacent to the exhaust flow path EP through the seal material 660.

The seal material 660 (also referred to as a sealant) is disposed so as to surround an outer edge of the refrigerant flow path FP as indicated by a light gray pattern in FIG. 4. The seal material 660 is disposed in a continuous linear shape here. The seal material 660 is disposed between the outer edge of the refrigerant flow path FP and the plurality of fastening parts 650. Thus, the refrigerant flow path FP is hermetically sealed (closed) and the leak of the refrigerant is prevented. As illustrated in FIG. 5, the seal material 660 is formed by filling a seal groove 615, which will be described below, with a sealing material and curing the sealing material here.

As the sealing material, a sealing material that has been known as being usable for this kind of application conventionally can be used without particular limitations. Examples thereof include sealing materials of various kinds of resins such as silicon (including modified silicon), acrylic, and polyurethane, and sealing materials of rubbers such as silicon rubber and butyl rubber. In particular, the silicon-based sealing material containing silicon is preferable because of exhibiting excellent adhesion to many adhesion target bodies. In addition, the silicon-based sealing material is relatively soft and easily deformed. Therefore, it is particularly effective to apply the art disclosed herein.

It is preferable to use the sealing material of a room-temperature curing type from the viewpoint of workability or the like. The sealing material of the room-temperature curing type is roughly classified into a one-liquid type (one component form) and a two-liquid type (two component form). The sealing material of the one-liquid type is typically cured by reaction with moisture in the air, which is simple because mixing two components required in the two-liquid type is unnecessary. In some embodiments, the seal material 660 is preferably formed of the silicon-based sealing material of the one-liquid type. Examples of a commercial product of the silicon-based sealing material of the one-liquid type include "Sikasil (registered trademark) SI" manufactured by Sika Japan Ltd.

As illustrated in FIG. 4 and FIG. 5, the bottom surface 610a of the main body part 610 includes a refrigerant concave part 613, a contact surface 614, and the seal groove 615 on the surface on the side facing the bottom surface cover 640 in the refrigerant region AF. Note that the main body part 610 is the casting product molded by casting here as described above. Therefore, the respective parts provided at the bottom surface 610a (the refrigerant concave part 613, the contact surface 614, and the seal groove 615) are formed integrally. In addition, the contact surface 614 and the seal groove 615 are not essential and can be omitted in another embodiment.

As illustrated in FIG. 5, the refrigerant concave part 613 is recessed to the side of separating from the bottom surface cover 640 (toward the accommodation space 600A of the case 600). The refrigerant concave part 613 has a substantially U-like shape in the cross-sectional view here. The depth (the maximum length of depression from the outer surface of the bottom surface 610a to the third direction Z, this definition applies similarly below) of the refrigerant concave part 613 is larger than that of the exhaust concave part 611 here. The refrigerant concave part 613 sections the refrigerant flow path FP together with the bottom surface cover 640. The refrigerant concave part 613 is at least partially adjacent to the exhaust concave part 611 through the seal material 660.

The refrigerant concave part 613 (or the refrigerant flow path FP) is provided preferably with at least a part thereof existing at a position facing the accommodation space 600A that accommodates the plurality of electrical energy storage devices 100. The refrigerant concave part 613 (or the refrigerant flow path FP) is provided preferably with at least a part thereof existing at a position overlapping with each of the plurality of electrical energy storage modules 500 (or the plurality of electrical energy storage devices 100) in the top view. In this arrangement, the refrigerant flows right under the plurality of electrical energy storage devices 100, thereby being able to cool the electrical energy storage devices 100 efficiently.

As illustrated in FIG. 4, the refrigerant concave part 613 is provided in a substantially U-like shape right under each of the plurality of electrical energy storage modules 500. In the example in FIG. 4, a first part P1 in a substantially U-like shape is provided right under the first electrical energy storage module 500, a second part P2 in a substantially U-like shape is provided right under the second electrical energy storage module 500, and a third part P3 in a substantially U-like shape is provided right under the third electrical energy storage module 500. Each of the first to third parts P1 to P3 includes a pair of straight line parts Ps extending along the first direction X, and a bent part Pf connecting the pair of straight line parts Ps. The first part P1 to the third part P3 communicate with each other through a connection part Pc provided in a substantially U-like shape. As indicated by arrows in FIG. 4, the refrigerant flowing from the inflow part FI to the refrigerant flow path FP flows in the first part P1, the second part P2, and the third part P3 in this order and then flows out of the case 600 through the outflow part FO.

As illustrated in FIG. 5, the contact surface 614 is a surface provided between the refrigerant concave part 613 (or the refrigerant flow path FP) and the seal material 660 (the seal groove 615) and projecting toward the bottom surface cover 640 to come in contact with the bottom surface cover 640. The contact surface 614 is provided continuously from the refrigerant concave part 613. The contact surface 614 is formed to be flat (a machining error or the like is allowable). The contact surface 614 is formed by surface finishing of the surface (outer surface) of the bottom surface 610a on the side facing the bottom surface cover 640 here.

As indicated by a dark gray pattern in FIG. 4, the contact surface 614 is disposed along the refrigerant flow path FP at the bottom surface 610a. The contact surface 614 is provided at a peripheral edge of the refrigerant concave part 613 (or the refrigerant flow path FP) in at least a part of a peripheral edge of the refrigerant flow path FP. In this embodiment, for example, in a part whose cross section is illustrated in FIG. 5, specifically the border part BP between the exhaust region AE and the refrigerant region AF, the contact surface 614 is disposed between the refrigerant flow path FP and the seal material 660. At the border part BP, the refrigerant flow path FP, the seal material 660, and the contact surface 614 extend in a band shape along the first direction X.

In this embodiment, a contact surface 614a is disposed between the first part P1 and the second part P2 and also between the second part P2 and the third part P3 in the refrigerant concave part 613 as illustrated in FIG. 4. The contact surface 614a extends in a straight line shape along the first direction X between the first part P1 and the second part P2 and between the second part P2 and the third part P3. On the contact surface 614a, the plurality of fastening parts 650 are provided. On the contact surface 614a, the fastening part 650 is provided in a gap part between the plurality of electrical energy storage modules 500. Thus, the integrity between the main body part 610 and the bottom surface cover 640 is improved and the airtightness of the refrigerant flow path FP is increased.

The seal groove 615 is a part where the seal material 660 is disposed as illustrated in FIG. 5. The seal groove 615 formed to be lower than the contact surface 614 so as to have a space from the bottom surface cover 640. The seal groove 615 is provided continuously from the contact surface 614. The seal groove 615 has a U-like shape in the cross-sectional view here. The depth of the seal groove 615 is smaller than that of the exhaust concave part 611 and the refrigerant concave part 613 here. The provision of the seal groove 615 makes it easy to dispose the seal material 660 at a desired position stably.

In FIG. 4, the position of the seal groove 615 is the same as the position of the seal material 660 described above (a position indicated by the light gray pattern). The seal groove 615 is disposed so as to surround the outer edge of the of the refrigerant flow path FP. The seal groove 615 is disposed between the outer edge of the of the refrigerant flow path FP and the plurality of fastening parts 650. In at least a part of the peripheral edge of the refrigerant flow path FP, the seal groove 615 is provided between the contact surface 614 and the boss part 619 (or a screw 670, see FIG. 5), which will be described below. In this embodiment, the seal groove 615 (the seal material 660) is disposed between the contact surface 614 and the boss part 619 (or the screw 670) at the border part BP between the exhaust region AE and the refrigerant region AF, in a part of the refrigerant concave part 613 that faces the connection part Pc, or the like.

In this embodiment, as illustrated in FIG. 5, the boss part 619 projecting toward the bottom surface cover 640 is provided at the border part BP between the exhaust concave part 611 (the exhaust flow path EP) and the refrigerant concave part 613 (the refrigerant flow path FP) on the surface of the bottom surface 610a on the side facing the bottom surface cover 640. The provision of the boss part 619 at the border part BP makes it possible to secure the overlap allowance for the screw 670. Thus, the fixing part can be provided by screwing the bottom surface cover 640 at the border part BP. Accordingly, the integrity between the main body part 610 and the bottom surface cover 640 can be increased. As a result, the expansion of the bottom surface cover 640 due to the pressure of the refrigerant can be suppressed.

In addition, since the provision of the fixing part at the border part BP makes it difficult for the seal material 660 to be pulled in the up-down direction, the damage of the seal material 660 can be suppressed. Thus, the sealability of the refrigerant flow path FP can be increased. Accordingly, the durability of the seal material 660 can be increased and the leak of the refrigerant from the refrigerant flow path FP can be suppressed for a long time. Additionally, the structure in which the boss part 619 is provided makes it difficult for the electrical energy storage pack 800 to become higher, so that the decrease in volume energy density can be suppressed.

The boss part 619 is provided on the exhaust concave part 611 side (outer edge side) relative to the seal material 660 (or the seal groove 615) as illustrated in FIG. 5. The boss part 619 is provided continuously from the seal groove 615 here. In a direction (left-right direction in FIG. 5) that intersects with the straight line part Ps of the refrigerant flow path FP (refrigerant flowing direction), the boss part 619 is provided between the seal groove 615 and the refrigerant concave part 613.

The boss part 619 projects toward the bottom surface cover 640 relative to the seal material 660 and the contact surface 614 here. The projecting length (the length in the third direction Z) of the boss part 619 from the contact surface 614 is preferably smaller than the thickness (plate thickness) of the bottom surface cover 640 in a plate-like shape. The projecting length of the boss part 619 is preferably 40 to 80% and more preferably 50 to 70% of the thickness of the bottom surface cover 640. In one example, the thickness of the bottom surface cover 640 is 4 mm and the projecting length of the boss part 619 is 2.5 mm.

The bottom surface cover 640 is screwed to the boss part 619. Specifically, the bottom surface cover 640 includes a penetration hole 640H at the position facing the boss part 619. In the bottom surface cover 640, the screw 670 (such as a bolt) is inserted to the penetration hole 640H and fixed with a fastening tool (such as a nut) that is not illustrated. In this embodiment, to the boss part 619, the protection cover 612C is screwed together with the bottom surface cover 640. Specifically, the bottom surface cover 640 and the protection cover 612C are overlapped in this order on an outer surface side of the boss part 619 and these are fastened with the screw 670. Thus, the integrity between the protection cover 612C and the bottom surface cover 640 can be increased. As a result, even if vibration, impact, or the like is applied on the electrical energy storage pack 800, for example, the protection cover 612C will not fall easily.

In some embodiments, the bottom surface cover 640 preferably includes a step part 640S at the position facing the boss part 619. The step part 640S is provided at an inner surface of the bottom surface 610a of the main body part 610 (a surface on a side facing the accommodation space 600A) here. The boss part 619 is engaged with the step part 640S. Thus, the integrity between the main body part 610 and the bottom surface cover 640 can be increased. In the step part 640S, the bottom surface cover 640 is formed thinner than in the other part (for example, the part facing the exhaust flow path EP). The thickness of the thin part is preferably 20 to 60% and more preferably 30 to 50% of the thickness (plate thickness) of the bottom surface cover 640. In one example, the thickness of the thin part is 1. 5 mm.

In some embodiments, the height of the step part 640S is preferably the same as the projecting length of the boss part 619 (a machining error or the like is allowable). The boss part 619 is preferably in contact with the step part 640S of the bottom surface cover 640. Thus, the overlap allowance for the screw 670 can be secured more while the height of the electrical energy storage pack 800 is suppressed.

In some embodiments, the border part BP is provided at the position facing the accommodation space 600A that accommodates the plurality of electrical energy storage devices 100. In other words, the border part BP is provided at the position overlapping with the electrical energy storage device 100 (the electrical energy storage module 500) in the top view. The boss part 619 is provided at the position facing the accommodation space 600A that accommodates the plurality of electrical energy storage devices 100. The boss part 619 is provided at the position overlapping with the electrical energy storage module 500 (the electrical energy storage device 100) in the top view. In such a case, the thickness of the wall becomes particularly small in the border part BP so that it is difficult to secure the overlap allowance for the screw 670. Thus, it is particularly effective to apply the art disclosed herein.

In some embodiments, the bottom surface 610a of the main body part 610 includes a placement surface 610F on which the plurality of electrical energy storage devices 100 (electrical energy storage modules 500) are placed and a depression part 610D that is depressed toward the bottom surface cover 640 relative to the placement surface 610F on the surface (inner surface) on the side facing the accommodation space 600A. The placement surface 610F is formed to be flat (a machining error or the like is allowable). The depression part 610D is provided continuously from the placement surface 610F. The depression part 610D includes the communication hole 612H. The provision of the communication hole 612H in the depression part 610D can secure the gas flow path in the accommodation space 600A stably, making it possible for the gas discharged from the electrical energy storage device 100 to flow smoothly to the exhaust flow path EP through the communication hole 612H.

In this embodiment, the border part BP is provided at the position facing the depression part 610D. In other words, the border part BP is provided at the position overlapping with the depression part 610D in the top view. The boss part 619 is provided at the position facing the depression part 610D. The boss part 619 is provided at the position overlapping with the depression part 610D in the top view. In such a case, the thickness of the wall becomes particularly small in the border part BP so that it is difficult to secure the overlap allowance for the screw 670. Thus, it is particularly effective to apply the art disclosed herein.

As illustrated in FIG. 4, a plurality of the screws 670 (fixing parts) are preferably provided at the border part BP. In this embodiment, the plurality of screws 670 are provided at equal intervals along the first direction X (or the refrigerant flowing direction in the refrigerant flow path FP). Although the illustration is omitted in FIG. 4, the boss part 619 is also provided at the same position as the screw 670. Thus, the effect of the art disclosed herein can be achieved at a higher level.

The electrical energy storage pack 800 disclosed herein can be used for various applications; for example, the electrical energy storage pack 800 can be suitably used as a motive power source for a motor (power source for driving) that is mounted on a vehicle such as a passenger car or a truck. The vehicle is not limited to a particular type, and may be a plug-in hybrid electric vehicle (PHEV), a hybrid electric vehicle (HEV), a battery electric vehicle (BEV), or the like.

Although the preferable embodiments of the present disclosure have been described above, they are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed.

As described above, the following items are given as specific aspects of the art disclosed herein.
Item 1: The electrical energy storage pack including the plurality of electrical energy storage devices, and the case that accommodates the plurality of electrical energy storage devices, in which the case includes the main body part that includes the bottom surface, the bottom surface cover that covers the bottom surface from the outer surface side, the air flow path that is provided between the bottom surface and the bottom surface cover and communicates with the outside of the case, the refrigerant flow path that is provided between the main body part and the bottom surface cover and lets the refrigerant flow therein, and the seal material that is disposed so as to surround the outer edge of the refrigerant flow path and adheres to the main body part and the bottom surface cover, thereby sealing the refrigerant flow path, the bottom surface of the main body part includes, on the surface on the side facing the bottom surface cover, the air flow concave part that is recessed to the side of separating from the bottom surface cover and sections the air flow path, the refrigerant concave part that is at least partially adjacent to the air flow concave part through the seal material, is recessed to the side of separating from the bottom surface cover, and sections the refrigerant flow path, and the boss part that projects toward the bottom surface cover on the side of the air flow concave part relative to the seal material at the border part between the air flow concave part and the refrigerant concave part, and the bottom surface cover is screwed to the boss part.
Item 2: The electrical energy storage pack according to Item 1, in which the bottom surface of the main body part further includes, on the surface on the side facing the bottom surface cover, the communication hole that is covered with the film-shaped body with air permeability and makes the accommodation space that accommodates the plurality of electrical energy storage devices and the air flow path communicate with each other, and the air flow path forms the exhaust flow path that exhausts the gas generated from the plurality of electrical energy storage devices.
Item 3: The electrical energy storage pack according to Item 2, in which the film-shaped body is covered with the protection cover from the outer surface side, and to the boss part of the main body part, the protection cover is screwed together with the bottom surface cover.
Item 4: The electrical energy storage pack according to any one of Items 1 to 3, in which the bottom surface cover includes the step part at the position facing the boss part of the main body part.
Item 5: The electrical energy storage pack according to Item 4, in which the boss part is in contact with the step part of the bottom surface cover.
Item 6: The electrical energy storage pack according to any one of Items 1 to 5, in which the bottom surface of the main body part further includes, on the surface on the side facing the bottom surface cover, the contact surface that is provided between the refrigerant concave part and the seal material and projects toward the bottom surface cover to come in contact with the bottom surface cover, and the boss part projects toward the bottom surface cover relative to the contact surface.
Item 7: The electrical energy storage pack according to any one of Items 1 to 6, in which the border part is provided at the position facing the accommodation space that accommodates the plurality of electrical energy storage devices.
Item 8: The electrical energy storage pack according to Item 7, in which the bottom surface of the main body part includes, on the surface on the side facing the accommodation space, the placement surface on which the plurality of electrical energy storage devices are placed, and the depression part that is depressed toward the bottom surface cover relative to the placement surface, and the border part is provided at the position facing the depression part.

## Claims

1. An electrical energy storage pack (800) comprising a plurality of electrical energy storage devices (100), and a case (600) that accommodates the plurality of electrical energy storage devices (100), wherein
the case (600) includes a main body part (610) that includes a bottom surface (610a), a bottom surface cover (640) that covers the bottom surface (610a) from an outer surface side, an air flow path (EP) that is provided between the bottom surface (610a) and the bottom surface cover (640) and communicates with an outside of the case (600), a refrigerant flow path (FP) that is provided between the bottom surface (610a) and the bottom surface cover (640) and lets a refrigerant flow therein, and a seal material (660) that is disposed so as to surround an outer edge of the refrigerant flow path (FP) and adheres to the bottom surface (610a) and the bottom surface cover (640), thereby sealing the refrigerant flow path (FP),
the bottom surface (610a) of the main body part (610) includes, on a surface on a side facing the bottom surface cover (640), an air flow concave part (611) that is recessed to a side of separating from the bottom surface cover (640) and sections the air flow path (EP), a refrigerant concave part (613) that is at least partially adjacent to the air flow concave part (611) through the seal material (660), is recessed to the side of separating from the bottom surface cover (640), and sections the refrigerant flow path (FP), and a boss part (619) that projects toward the bottom surface cover (640) on a side of the air flow concave part (611) relative to the seal material (660) at a border part (BP) between the air flow concave part (611) and the refrigerant concave part (613), and
the bottom surface cover (640) is screwed to the boss part (619).

2. The electrical energy storage pack (800) according to claim 1, wherein
the bottom surface (610a) of the main body part (610) further includes, on the surface on the side facing the bottom surface cover (640), a communication hole (612H) that is covered with a film-shaped body (612M) with air permeability and makes an accommodation space (600A) that accommodates the plurality of electrical energy storage devices (100) and the air flow path (EP) communicate with each other, and
the air flow path (EP) forms an exhaust flow path that exhausts gas generated from the plurality of electrical energy storage devices (100).

3. The electrical energy storage pack (800) according to claim 2, wherein
the film-shaped body (612M) is covered with a protection cover (612C) from an outer surface side, and
to the boss part (619) of the main body part (610), the protection cover (612C) is screwed together with the bottom surface cover (640).

4. The electrical energy storage pack (800) according to any one of claims 1 to 3, wherein the bottom surface cover (640) includes a step part (640S) at a position facing the boss part (619) of the main body part (610).

5. The electrical energy storage pack (800) according to claim 4, wherein the boss part (619) is in contact with the step part (640S) of the bottom surface cover (640).

6. The electrical energy storage pack (800) according to any one of claims 1 to 5, wherein
the bottom surface (610a) of the main body part (610) further includes, on the surface on the side facing the bottom surface cover (640), a contact surface (614) that is provided between the refrigerant concave part (613) and the seal material (660) and projects toward the bottom surface cover (640) to come in contact with the bottom surface cover (640), and
the boss part (619) projects toward the bottom surface cover (640) relative to the contact surface (614).

7. The electrical energy storage pack (800) according to any one of claims 1 to 6, wherein the border part (BP) is provided at a position facing the accommodation space (600A) that accommodates the plurality of electrical energy storage devices (100).

8. The electrical energy storage pack (800) according to claim 7, wherein
the bottom surface (610a) of the main body part (610) includes, on a surface on a side facing the accommodation space (600A), a placement surface (610F) on which the plurality of electrical energy storage devices (100) are placed, and a depression part (610D) that is depressed toward the bottom surface cover (640) relative to the placement surface (610F), and
the border part (BP) is provided at a position facing the depression part (610D).
